# EUROPÄISCHE PATENTSCHRIFT

(11) **EP 1 848 780 B1**
(45) Veröffentlichungstag und Bekanntmachung des Hinweises auf die Patenterteilung: **15.04.2009**
(21) Anmeldenummer: 06706973.2
(22) Anmeldetag: 15.02.2006
(51) Int. Cl.: C09C 1/36, C08K 9/02, C08K 3/00, C08K 3/22, C08K 3/24

(54) **KOMPOSITPIGMENT, VERFAHREN ZU DESSEN HERSTELLUNG SOWIE DESSEN VERWENDUNG**
COMPOSITE PIGMENT AND METHOD FOR THE PRODUCTION AND USE THEREOF
PIGMENT COMPOSITE, PROCEDE DE PRODUCTION ET UTILISATION ASSOCIES

(30) Priorität: 15.02.2005 DE 102005006767
(43) Veröffentlichungstag der Anmeldung: 31.10.2007
(73) Patentinhaber: Heubach GmbH, 38685 Langelsheim (DE)
(72) Erfinder: HEUBACH, Rainer, A-5084 Grossgmain (AT)
(74) Vertreter: Hagemann, Heinrich
(86) Internationale Anmeldenummer: PCT/EP2006/001371
(87) Internationale Veröffentlichungsnummer: WO 2006/087184

(56) Entgegenhaltungen:
- US-A- 5 399 197
- US-A- 5 411 586
- US-A1- 2005 013 934
- US-B1- 6 284 035

## Beschreibung

Die Erfindung betrifft ein feinteiliges, brillantes, farbstarkes und hochdeckendes Kompositpigment mit einem Pigment auf Rutil-Basis sowie einem oder mehrerer Pigmente auf Basis von Bismutvanadat oder eines modifizierten Bismutvanadates, ein zur Herstellung dieses Kompositpigments besonders geeignetes Verfahren und dessen spezielle Verwendung.

Während Bismutvanadat-Pigmente eine hohe Farbstärke und durch isomorphen Ersatz der III- und V-wertigen Metallionen eine erhebliche Bandbreite an Farbtönen im gelbroten Teil des Farbspektrums aufweisen [s. z.B. H. Endriss in: H. M. Smith (Hrsg.), "High Performance Pigments", Weinheim: VCH-Wiley 2002, S. 7-12], sind Nickel-Antimon-Titangelbpigmente, sofern ausreichend fein hergestellt, Pigmente mit zwar relativ hoher Opazität, aber auch relativ geringer Farbstärke. Noch schlechter steht es um die Farbtonreinheit von Chrom-Antimon-Titangelbpigmenten. Der Fachliteratur entnimmt man die unterschiedlichen Farbstärken mit Remissionskurven, wie beispielsweise "Ullmann's Handbuch der Technischen Chemie", 6. Aufl., Weinheim: VCH-Wiley 2003, Kap. 3.1.3 "Mixed Metal Oxides" sowie Kap. 3.3 "Bismut Pigments", Fig. 29, oder in H. M. Smith, "High Performance Pigments", Weinheim: VCH-Wiley 2002, S. 9.

Durch Beschichten mit hochwertigen organischen Pigmenten lassen sich für anorganische Pigmente hochsaturierte Farbtöne erzielen, mit denen sich das gesamte Farbspektrum - mit Ausnahme von Blau- und Violettfarbtönen - abdecken lässt. Durch diese Überfärbungen ergibt sich eine Synergie zwischen der relativ hohen Deckkraft der Nickel-Antimon-Titangelbe mit der hohen Farbstärke der in der Regel recht teuren organischen Überfärbungspigmente. Dieser Effekt lässt sich auch mit Titanweiß erzielen, wobei allerdings Überfärbungen immer zu stärkeren Aufhellungen, also zu einer geringeren Saturierung aufgrund der starken Weißfärbekraft von Titanweißpigmenten, führen. Ein weiterer Nachteil von Kompositpigmenten auf Basis von Titanweiß liegt in dessen photokatalytischer Wirkung, die zu einer starken Beeinträchtigung der Licht- und Wetterechtheit der teuren organischen Farbkomponenten führt. Infolgedessen "altern" auf Titanweiß basierende Kompositpigment-Vollfarbtöne schneller als Kombinationen der gleichen organischen Farbkomponenten mit Nickel-Antimon-Titangelb.

Buntpigmente auf Rutilbasis konnten bisher die sich infolge der sich seit 1980 stetig verschärfenden Gefahrstoff- und Umwelt-Gesetzgebung bietende Chance, 100.000 Jato Bleisulfo-chromat- und -molybdatrot-Pigmente zu ersetzen, nur unzureichend nutzen, weil 1) physikalisch passende organische Pigmente ein hohes Preisniveau aufweisen, 2) einige physikalisch passende, preisgünstigere organische Pigmente auf Dauer trotz gegenüber TiO₂ verminderter Photoaktivität des Rutilgelb-Basispigmentes zu wenig lichtecht sind, 3) viele organische Komponenten der Kompositpigmente im oberen Temperaturbereich > 280°C nicht ausreichend widerstandsfähig sind und 4) die rohen Rutile sich insbesondere durch Trübe, mangelnden Glanz, unreine Farbtöne, geringe Farbstärke und hohe Abrasivität darstellten. Der Mangelpunkt 4 , mit Ausnahme der geringen Farbstärke, beruht auf derselben Ursache, nämlich zu hoher durchschnittlicher Teilchengröße bei scharfkantiger Form und großer Härte, die bei den besten im Markt angebotenen Nickel-Antimon-Titangelben bei durchschnittlich 900 bis 1000 nm liegt, während die optimale Deckkraft eines pigmentären Farbmittels bei einer Teilchengröße von 300 nm sowie bei optimierter Kornform und -oberfläche erzielt wird. Bereits oberhalb von 500 nm mittleren Teilchendurchmessers verliert ein Pigment etwa 20 % an Deckfähigkeit.

Bei Anwendungen sowohl reiner Nickel-Antimon-Titangelb-Pigmente als auch reiner Bismutvanadat-Pigmente ist es zu vermeiden, dass sie bei Unterschreiten eines mittleren Teilchendurchmessers von knapp der halben Wellenlänge des von ihnen remittierten Lichts transparent werden. Ein Nassvermahlen von Rutilen, also auch Rutilgelb-Pigmenten, in Perlmühlen mit hohem Energieeintrag gilt z.B. gemäß der DE-A-3930098 sowie der DE 102004040384.8 als Stand der Technik. Die Aggregate zur Herstellung werden von verschiedenen Fachfirmen angeboten. Die einzustellende scharfe Korngrößenverteilung um 300 nm erweist sich jedoch in einigen Anwendungen für sich genommen bei Nickeltitan- Rutilgelben als relativ farbschwach. Probleme verbleiben in der Bereitstellung einer hohen Farbstärke, um die infolge der Feinstvermahlung polychromatischere Remission ("Aufweißung") mit einem anderen anorganischen Gelbpigment zu kompensieren, unter ebenfalls und gleichrangig zu fordernder hoher Brillanz, Deckkraft und Stabilität gegenüber thermischen, chemischen und Lichteinflüssen sowie Einsatz weitestgehend nicht-toxischer Komponenten.

Unter Berücksichtigung der vorstehenden Ausführungen soll auch der weitere Stand der Technik geschildert werden: Die EP-A-816440 beschreibt das trockene Vermischen bzw. Ko-Vermahlen von Bismutvanadat- und Azopigmenten sowie Pigmenten der Diketopyrrolopyrrol-Reihe. Die Kombinationen zeichneten sich durch eine hohe Farbtonreinheit aus. Beim Nachstellen erkennt man aber Defizite in der Deckkraft. Die US-A-5411586 befasst sich mit dem Auffällen kleiner Mengen von Bismutvanadat auf plättchenförmige Substratpigmente zur Herstellung gelber Effektpigmente. Diese Patentschrift entspricht diesbezüglich weitgehend der Lehre der EP 0632110 A1. Die US-A-5399197 offenbart die Darstellung von Bismutvanadat- Pigmenten mit teilweise isomorph durch Silicat oder Phosphat ersetztem Anionengitter. Die Herstellung ist infolge des mehrstufigen Fertigungsprozesses teuer. Die US 2005/013934 A1 beschreibt die Herstellung von Kern-Hülle-Kompositpigmenten. Der Kern besteht aus Titandioxidplättchen, umhüllt mit einer Schicht aus z.B. Bismutvanadat. Mengenangaben der Pigmente von Kern und Schale zueinander werden durch Schichtdicken angegeben.

Schließlich sei noch auf den Stand der Technik nach der EP 1072656 A2 und US 5851787 A kurz eingegangen: Die EP 1072656 bezieht sich auf eine Pigmentzubereitung, die als wesentliche Mischungskomponente (A) ein anorganisches Pigment aus der Gruppe der Bismutvanadat-Pigmente Pigmente und Rutilpigmente und (B) ein Phosphat enthält. Bevorzugt enthält diese Pigmentzubereitung 50 bis 99 Gew.-% der Komponente (A) und 1 bis 50 Gew.-% der Komponente (B). Es handelt sich um ein reines Pigmentgemisch dieser beiden zwingenden Bestandteile. Nach der US 5851787 A werden gelbe Bismutvanadat-Pigmente ausdrücklich als Kernmaterial dargestellt. Dieses Kernmaterial wird mit einem speziellen Material, ausgewählt unter Aluminiumphosphat, Aluminium/Zink-Phosphat oder Siliziumdioxid umhüllt. Hier werden zunächst die Bismutvanadatteilchen hergestellt und diese in einer heißen, Phosphat-enthaltenden wässrigen Lösung dispergiert, um die Oberfläche der Teilchen zu aktivieren. Es werden dann aus der bezeichneten Gruppe von Materialien Ausfällungen auf dem Kernmaterial aus Bismutvanadat vorgenommen. Die beschichteten Bismutvanadatteilchen werden abfiltriert, gewaschen und getrocknet.

Ausgehend von dem vorstehend geschilderten Stand der Technik lag der Erfindung die Aufgabe zugrunde, ein Kompositpigment der eingangs beschriebenen Art vorzuschlagen, das bezüglich der Deckkraft, der Farbstärke, des Glanzes sowie der Abrasivität überlegene Eigenschaften zeigt. Darüber hinaus soll es thermischen Belastungen gegenüber dauerhaft beständig sein. Ferner soll es einen möglichst geringen bzw. keinen Gehalt an Eisen aufweisen, beispielsweise allenfalls im ppm-Bereich für die Verträglichkeit mit PVC-Matrices. Darüber hinaus soll die Erfindung ein Verfahren vorschlagen, mit dem das erfindungsgemäße Kompositpigment in besonders günstiger Weise hergestellt werden kann. Ziel der Erfindung ist es auch, bei Anwendungen des erfindungsgemäßen Komposltpigmentes verbesserten Glanz und verminderte Abrasivität zu erlangen.

Erfindungsgemäß wird diese Aufgabe durch ein Kompositpigment und dadurch gelöst, dass dieses eine Korngrößenverteilung mit Teilchendurchmessern zwischen 100 und 2600 nm bei einem Hauptmaximum der Verteilungskurve zwischen 200 und 700 nm, nach DIN 67530 einen 20°-Reflektometer-Glanzwert von mindestens 57 und einen 60°-Reflektometer-Glanzwert von mindestens 80 sowie ein Deckvermögen nach DIN 55978 von mehr als 90%, bezogen auf ein Ttandioxid-Rutilpigment als Vergleichssubstanz, aufweist, und es dabei 10 bis 90 Gew.-% Pigment auf Rutilbasis und 90 bis 10 Gew.-% Pigment auf Basis von Bismutvanadat bzw. modifizierten Bismutvanadaten, bezogen auf den Gesamtpigmentanteil, enthält. Hierbei ist das Pigment auf Rutil-Basis ein Nickel-Antimon-Rutilgelb oder ein Chrom-Antimon-Rutilgelb , das von Bismutvanadat bzw. modifiziertem Bismutvanadat umhüllt ist.

Das obige Kompositpigment gemäß der Erfindung zeichnet sich insbesondere dadurch aus, dass bei einer oligomodalen Häufigkeitsverteilung ein oder mehrere Nebenmaxima mit weniger als 45% der Höhe des Hauptmaximums zwischen 300 und 1500 nm auftreten.

Eine vorteilhafte Ausgestaltung der Erfindung besteht darin, dass das Kompositpigment eine Korngrößenverteilung mit Teilchendurchmessern zwischen etwa 100 und 1500 nm, insbesondere zwischen 120 und 800 nm, aufweist und das Hauptmaximum zwischen 250 und 330 nm und/oder das Nebenmaximum zwischen 480 und 800 nm liegt. Des Weiteren hat es sich zur Lösung der gestellten Aufgabe als vorteilhaft erwiesen, dass das Kompositpigment eine asymmetrisch geformte mono-modale Häufigkeitsverteilung des Teilchendurchmessers mit einem Maximum zwischen 200 und 520 nm, insbesondere zwischen 280 und 390 nm, aufweist.

Das Kompositpigment enthält, bezogen auf den Gesamtpigmentanteil, etwa 10 bis 90 Gew.-% Pigment auf Rutil-Basis und etwa 90 bis 10 Gew.-% Pigment auf Basis von Bismutvanadat bzw. des modifizierten Bismutvanadats. Dabei wird als Pigment auf Rutil-Basis ein Nickel-Antimon-Rutilgelb, ein Chrom-Antimon-Rutilgelb oder ein nur schwach durch Fremdmetalle dotiertes Titandioxid mit Rutilstruktur eingesetzt. Das modifizierte Bismutvanadat ist vorzugsweise ein durch isomorphen Ersatz modifiziertes Bismutvanadat, wobei es sich bei dem isomorphen Ersatz insbesondere um den Einbau eines Nebengruppenelementes aus den Gruppen 5 bis 7, vorzugsweise in Form von Molybdän, Niob, Mangan und/oder Wolfram handelt. Auch ist es vorteilhaft, wenn der isomorphe Ersatz durch Hauptgruppenelemente der Gruppen 3 bis 5, insbesondere Bor, Silizium und/oder Phosphor erfolgt.

Um mit dem erfindungsgemäßen Kompositpigment besondere Effekte zu erzielen, wie insbesondere eine hohe Temperaturbeständigkeit bei der Weiterverarbeitung, insbesondere bei der Einarbeitung in polymere Systeme, wird es bevorzugt, dass das Kompositpigment zusätzlich eine nicht-kristalline Beschichtung aufweist. Hierzu lässt sich das vorteilhafte Mengenverhältnis bezeichnen. So macht die nicht-kristalline Beschichtung, bezogen auf den Gesamtpigmentanteil, vorzugsweise 2 bis 30 Gew.-%, insbesondere 7 bis 20 Gew.-% aus. Der gewichtsprozentuale Rahmen von 10 bis 15 Gew.-% ist ganz besonders bevorzugt. Bei Einhaltung dieser Rahmenbedingung wird es erreicht, dass das Kompositpigment eine hohe thermische, chemische sowie photokatalytische Resistenz aufweist.

Bei der Materialfrage ist der Fachmann nicht unmittelbar beschränkt. Es hat sich gezeigt, dass die nicht-kristalline Beschichtung vorzugsweise Oxide des Bors, Aluminiums, Siliziums und/oder Phosphors enthält, die zu dem besonderen Effekt der thermischen, chemischen und photokatalytischen Beständigkeit führen. In Einzelfällen kann es von Vorteil sein, dass die nicht-kristalline Beschichtung mehrlagig ausgebildet ist, vorzugsweise aus Salzen der Sauerstoffsäuren der Elemente der Gruppen 3 bis 5 des Periodensystems. Diese Salze liegen insbesondere in Form von Boraten, Silikaten, Phosphaten und/oder Aluminaten vor. Dabei liegen die Borate, Silikate, Phosphate und/oder Aluminate vorzugsweise in Form von Bismut, Calcium und/oder Aluminium vor. Der Vorteil der Mehrlagigkeit liegt darin, dass zusätzliche Diffusionsbarrieren entstehen, die ein Freisetzen von Vanadiumverbindungen verhindern. Darüber hinaus wird das eingekapselte Kompositpigment vor thermischen und chemischen Einflüssen sowie photokatalytischen Wechselwirkungen mit der Anwendungsmatrix noch besser abgeschirmt.

Um eine koloristische Feinabstimmung bei dem erfindungsgemäßen Kompositpigment zu erreichen, können in dieses organische Buntpigmente integriert werden. Die koloristische Feinabstimmung kann sich beziehen auf das "Schärfen" der Absorptionskante zum Erzielen brillanterer Farbtöne, wofür sich erfahrungsgemäß transparente, hochstabile und ggfs. leicht grünstichige Pigmente bevorzugt eignen.

Um diese Effekte zu erzielen, enthält das erfindungsgemäße Kompositpigment vorzugsweise, bezogen auf die Gesamtmenge an Pigment, 0,1 bis 5 Gew.-%, insbesondere 0,2 bis 2 Gew.-% organische Pigmente. Zweckmäßigerweise liegen die organischen Pigmente als Flavanthron- oder Chinophthalonpigment, insbesondere in Form von C.I. Pigment Yellow 24 oder 138, als Isoindolin- und Isoindolinonpigmente, insbesondere in Form von C.I. Pigment Yellow 109, 110, 139, 173 oder 185, als Anthrapyrimidinpigment, insbesondere in Form von C.I. Pigment Yellow 108, als Anthrachinonpigmente, insbesondere in Form von C.I. Pigment Yellow 147, 177 oder 199, Benzimidazolon-Azopigmente, insbesondere in Form von C.I. Pigment Yellow 120, 151, 154 oder 175, besonders bei Nutzung von Chrom-Antimon-Titangelb als Basispigment, Diketopyrrolopyrrolpigmente, insbesondere in Form von C.I. Pigment Orange 71, 73, 81 oder C.I. Pigment Red 254, 255, 264, 270 oder 272, Phthalocyaninpigmente, besonders zur Erzielung grünstichiger oder grüner Farbtöne als Phthalocyaninblau, insbesondere in Gestalt von C.I. Pigment Blue 15:3, 15:4, 16, 75, 76 oder 79 (Aluminium-Phthalocyanin) und/oder zur Erzielung spezieller Farbeinstellungen gegebenenfalls in Verbindung mit Chrom-Antimon-Titanrutilgelb als einem Basispigment auch als rotstichiges Blaupigment, beispielsweise der Indanthronreihe in Form von C.I. Pigment Blue 60, 64 oder 80 vor.

Ohne dass dieser Arbeitshypothese eine einschränkende Wirkung zukommen soll, kann davon ausgegangen werden, dass hierbei gegebenenfalls "Überkorn" > 300 nm des organischen Pigmentes oder das aus der Synthese anfallende organische Rohpigment ("Crude") im Zuge einer mechanischen Weiterverarbeitung durch die härteren anorganischen Komponenten unter einen Teilchendurchmesser von 150 nm verrieben und auf die Oberfläche auf- bzw. in oberflächennahe Poren der anorganischen Komposite eingepresst wird, wodurch sich automatisch die gewünschte Transparenz und die primär absorptive Farbwirkung der organischen Pigment-Komponenten einstellt.

Das erfindungsgemäße Kompositpigment zeichnet sich durch besonders vorteilhafte technische Werte aus. Im Hinblick auf die noch anzusprechenden nützlichen Anwendungen wird dabei so *eingestellt*, dass es nach DIN 67530 einen vorteilhaften 20°-Reflektometer-Glanzwert von mindestens 57, insbesondere von mindestens 60, und einen 60°-Reflektometer-Glanzwert von mindestens 80, insbesondere 85 bis 100 aufweist. Hierbei wird es bevorzugt, dass der 20°-Reflektometer-Glanzwert 65 bis 80 und der 60°-Reflektometer-Glanzwert 88 bis 95 beträgt. Das Deckvermögen des Kompositpigments beträgt nach DIN 55978 mehr als 90%, insbesondere 110%, bezogen auf ein Titandioxid-Rutilpigment als Vergleichssubstanz, aufweist. Die Farbstärke liegt nach DIN 55999 vorzugsweise zwischen 110 und 500%, bezogen auf ein Nickeltitan-Rutilpigment als Vergleichssubstanz, insbesondere zwischen 140 und 480%.

Für den Fachmann ist erkennbar, dass dem erfindungsgemäßen Kompositpigment zur Steuerung der Eigenschaften, die im Normalfall bei Anwendungen von Pigmenten dieser Art vorteilhafterweise bedacht werden, Additive einverleibt werden können. Zur Staubminderung wird vorzugsweise ein Wachs, insbesondere als Calciumstearat, und/oder Polyethylenglykol oder Polysiloxan einbezogen. Bei Einsatz organischer Pigmente empfiehlt sich erfahrungsgemäß die Verwendung von durch einen funktionalen organischen Rest substituierten Orthokieselsäureestern als interne Haftzusätze. Der Anteil des Additivs liegt, bezogen auf den Gesamtpigmentanteil, vorzugsweise zwischen 0,2 und 12 Gew.-%, insbesondere zwischen 1 und 7 Gew.-%.

Gegenstand der Erfindung ist auch ein Verfahren zur Herstellung des beschriebenen Kompositpigmentes, das dadurch gekennzeichnet ist, dass eine wässrige Aufschlämmung des Pigments auf Rutil-Basis mit einem Feststoffgehalt von 20 bis 50 Gew.-% und Teilchendurchmessern zwischen 50 und 1200 nm sowie einem Hauptmaximum der Korngrößenverteilung zwischen 200 und 400 nm, insbesondere zwischen 230 und 400 nm, in einem Mischbehälter vorgelegt wird, in diese wässrige Aufschlämmung zuerst die wässrige Lösung eines Vanadats und darauf die wässrige Lösung eines Bismutsalzes eingetragen werden, der saure pH-Wert der erhaltenen Reaktionsmischung unmittelbar darauf durch Zugabe von Lauge auf höher als 4 eingestellt wird, wodurch Bismutvanadat bei der sich zwischen 70 und 95°C, insbesondere zwischen 70 und 90°C, einstellenden erhöhten Temperatur auf das Pigment auf Rutil-Basis aufgefällt und das anfallende Kompositpigment abgetrennt, getrocknet und calciniert wird.

Bei der Durchführung dieses Verfahrens wird also eine wässrige Aufschlämmung des Pigmentes auf Rutil-Basis vorgelegt und sukzessive die wässrige Lösung des Vanadats und des Bismutsalzes in dieses Medium eingetragen. Bevorzugt wird dabei in die Aufschlämmung des Pigments auf Rutil-Basis zuerst die wässrige Lösung des Vanadats und darauf die wässrige Lösung des Bismutsalzes, insbesondere eines pH-Wertes von 0,1 bis 1,5, zugegeben. Dies hat den Vorteil, dass dann die Reaktivitäten der Komponenten einen optimalen Verlauf der exothermen Fällungsreaktion ermöglichen.

Bei der Auswahl der Pigmente wird der Aufschlämmung des Pigments auf Rutil-Basis ein Nickel-Antimon-Rutilgelb oder ein Chrom-Antimon-Rutilgelb zugegeben. Das herangezogene Vanadat liegt zweckmäßigerweise in Form eines Alkali- oder Ammoniumvanadats vor, insbesondere in Form von Natriumvanadat. Das Bismut-Salz wird vorzugsweise in Form von Bismutnitrat eingesetzt. Der Feststoffgehalt der vorgelegten wässrigen Aufschlämmung eines Pigments auf Rutil-Basis; in der die Reaktion abläuft, wird auf etwa 20 bis 50 Gew.-% eingestellt. Wird der Feststoffgehalt von 50 Gew.% überschritten, führt das zu einer im Verlaufe der Reaktion zunehmenden Verfestigung des Ansatzes mit einer nicht mehr kontrollierbaren lokalen Dosierung der Komponenten und einer problematischen Wärmeregelung, während ein Unterschreiten von etwa 20 Gew.-% bedeutet, dass die pigmentären Produkte nach dem Abtrennen separat vorliegen und die Raum-Zeit-Ausbeute unwirtschaftlich gering wird.

Die vorgegebene Aufschlämmung des Pigments auf Rutil-Basis ist zunächst bei üblicher Verfahrensführung neutral. Nach Zugabe der verschiedenen Ausgangsmaterialien liegt der pH-Wert im Allgemeinen unter 1, so dass er durch zusätzliche Maßnahmen auf mehr als 8, insbesondere 8 bis 11, eingestellt werden sollte. Es ist also wesentlich für die Erfindung, dass der pH-Wert im Reaktionsmedium rasch, insbesondere in weniger als 30 min auf mehr als 4 eingestellt wird. Dies erfolgt vorzugsweise durch Zugabe von Natronlauge.

Die Umsetzungsreaktion zur Herstellung des erfindungsgemäßen Kompositpigments sollte bei erhöhter Temperatur erfolgen. Eine Temperatur von mehr als 90°C, insbesondere etwa 95°C, ist besonders vorteilhaft. Wesentlich höhere Temperaturen lassen sich in dem wässrigen Medium nur durch Druckbeaufschlagung erzielen. Diese würden nicht zu relevanten Vorteilen führen, sondern bergen bei niedrigen pH-Werten die Gefahr der Schädigung des Kempigmentes auf Rutil-Basis.

Das nach dem oben beschriebenen Verfahren hergestellte Kompositpigment wird zweckmäßiger Weise in üblicher Weise getrocknet, wie beispielsweise in einem Bandtrockner oder Sprühturm.

Es schließt sich zur Ausbildung der für pigmentäre Anwendungen erforderlichen Bismutvanadat-Kristallstruktur ein Calcinationsschritt an. Es hat sich als vorteilhaft erwiesen, wenn das getrocknete Kompositpigment bei einer Temperatur von 150 bis 500°C, insbesondere 250 bis 390°C, calciniert wird, beispielsweise in einer Einrichtung wie einem Tunnelofen oder Haubenofen. Das calcinierte Kompositpigment kann verschiedenen Nachbehandlungen unterzogen werden, um diesem zusätzlich vorteilhafte Eigenschaften zu verleihen. So kann in üblicher Weise ein Wachs, vorzugsweise in Form eines Calciumstearats, Polyethylenglykol oder Polysiloxan zur Staubminderung eingearbeitet werden.

Auch kann eine nicht-kristalline Beschichtung ausgebildet werden, auf die vorstehend bereits eingegangen wurde. Deren Ausbildung kann in üblicher Weise erfolgen, beispielsweise durch Wiederanschlämmen des Pigmentes und wechselweises Auffällen amorpher Schichten von Silicium- und Aluminiumoxiden.

Erfindungsgemäß führt die Ausbildung einer amorphen bzw. nicht-kristallinen Schicht aus Bismutboraten, -silikaten und/oder Phosphaten dazu, scharfe Kanten und Ecken der Pigmentpartikel zu vermeiden und Kristallisationskeime für eine kristallisationsgefährdete Polymermatrix zu minimieren (Tendenz zum Verzug). Ein besonderer Vorteil der Ausbildung der nicht-kristallinen Schicht liegt darin, dass sich bei der Weiterverarbeitung eine bemerkenswerte Temperaturbeständigkeit des erfindungsgemäßen Pigmentes einstellt, so insbesondere bei der Einarbeitung in polymere Systeme wie Thermoplaste und dergleichen. Das erfindungsgemäße Kompositpigment zeichnet sich durch eine hohe Brillanz, große Farbstärke und durch ausgezeichnete Deckkraft aus. Dieses belegen nachdrücklich die unten folgenden Beispiele. Diese vorteilhaften Eigenschaften bleiben auch bei vielfältigen Anwendungen erhalten. Besonders bevorzugt wird die Verwendung des erfindungsgemäßen Kompositpigmentes zur Einarbeitung in polymere Materialien, Baustoffe, Lacke und Farben. Das Kompositpigment gemäß der Erfindung zeigt sich hier als applikationsstabil. Es hat sich im Ergebnis gezeigt, dass die der Erfindung zugrunde liegende Aufgabe in ihrer komplexen Darstellung überraschend umfassend gelöst wird.

Das beschriebene Verfahren gemäß der Erfindung hat sich bei der Herstellung des beanspruchten Kompositpigments als besonders vorteilhaft erwiesen. Nicht gleichermaßen vorteilhaft, aber dennoch durchführbar und denkbar sind verschiedene andere Verfahren. Diese könnten auf normalen mechanischen Mischverfahren beruhen, so insbesondere auf einem mechanischen Verarbeiten mit "inniger und mechanisch stabiler Haftung der Komponenten". Denkbar wäre in fachmännischer Ausgestaltung auch ein entsprechendes Nassmahlverfahren. Gleiches gilt für ein Homogenisieren in einer flüssigen Phase in beispielsweise einem "Dissolver", wobei unter bestimmten Bedingungen eine weitestgehend einheitliche Pigmentphase erzeugt werden kann. Schließlich ist auch denkbar, Bismutvanadate und Rutil-Mischphasen-Rohpigmente trocken zu verreiben oder zu verkollern.

Zu der Erfindung lässt sich technologisch und im Hinblick auf erzielbare Vorteile weiterhin Folgendes ausführen:

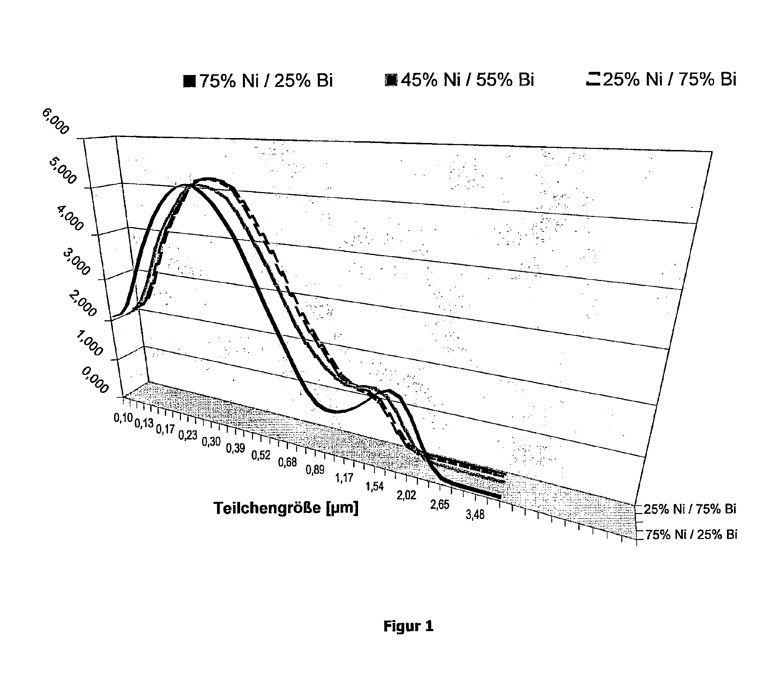

Es wird demzufolge in Gegenwart geeigneter Zusatzstoffe Bismutvanadat bzw. modifiziertes Bismutvanadat in einem Rührbehälter aufgrund der Reaktion der gelösten Ausgangsrohstoffe auf das vorgelegte Pigment auf Rutil-Basis aufgefällt. Durch eine intensive Durchmischung, gegebenenfalls zugeschaltete Kreislaufvermahlung und vor allem durch die feinstteilige Auffällung des Bismutvanadats auf das Pigment auf Rutil-Basis, gegebenenfalls unter rekristallisierenden Bedingungen, wird ein intensiv leuchtendes, gelbes, gut deckendes und leicht dispergierbares Kompositpigment erhalten. Durch Variation der Farbtöne des Rutil-Mischphasen-pigmentes als Basisfarbe und der Wahl entsprechender Ersatzelemente im Bismutvanadat kann man praktisch jeden Gelbton bis hin zum Orange in hoher Brillanz und Farbstärke sowie mit hervorragender Deckkraft einstellen. Dabei hat es sich als überraschend erwiesen, dass die Korngrößenverteilung, nach dem erfindungsgemäßen Verfahren erzielt, im Wesentlichen von den Zusammensetzungsverhältnissen unabhängig ist. In jedem Fall wird in den bezeichneten Rahmenbedingungen ein im Wesentlichen qualitativ gleichwertiges Erzeugnis erzielt, was einen bedeutsamen Vorteil darstellt. Dieser besondere Vorteil wird durch das beiliegende Diagramm in Form der Figur 1 besonders deutlich. Darin werden für drei Ausgangsmischungen die Nickel- und die Bismutwerte bezeichnet (75% Ni/25% Bi; 45% Ni/55% Bi sowie 25% Ni/75% Bi) sowie der Kurvenverlauf Teilchengröße (µm) gegenüber den Volumenprozenten dargestellt.

Die nachfolgend angegebenen Beispiele sollen nicht einschränkend sein. Dem Fachmann ist es möglich, sie in einer Weise auszugestalten, dass die erfindungsgemäß angestrebten Effekte weiterhin erzielt werden. Die Prozent- und Anteilsangaben beziehen sich auf die Masse.

### Beispiel 1 (Fällung von Bismutvanadat auf ein Rutilgelbpigment)

In einem Rührtank werden bei 25°C in 10 m³ Wasser 2145 kg feinstvermahlenes Nickelrutilgelb nach Anmeldeschrift DE 102004040384.8 aufgeschlämmt und mit einer Umfangsgeschwindigkeit von ca. 8 m/s gerührt. Hierzu werden, unter Wahrung eines Überschusses von Natriumvanadat nach Vorlage, bei 5°C Natriumvanadatlösung und 12,5-M Bismutnitratlösung in HNO₃ zudosiert, zum stöchiometrischen Ausgleich wird letztere entsprechend nachlaufen gelassen, bis formal 715 kg BiVO₄ entstanden sind. Über diesen Punkt hinaus wird noch ein Überschuss von 1,2% Bismutnitratlösung zudosiert. Der pH-Wert wird nach Ende der Zugabe von salpetersaurer Bi(NO₃)₃-Lösung zunächst durch 200 L 10%-iger Natriumboratlösung unter Rühren bei 90°C abgestumpft, und dann der pH-Wert durch gleichzeitiges Zusetzen von Natriumhydroxidlösung auf 5,5 hochgestellt, dann nochmals bei 90°C 5 Stunden gerührt. Nach 1 Stunde Rühren bei 25°C filtriert man ab und wäscht bis zu einer Leitfähigkeit von < 460 µS/cm nach.

Nach dem Trocknen und Zerkleinern des Filterkuchens durch 10-minütiges Rütteln im Scandex-Mischer wird das Rohpigment 1 Stunde bei einer Temperatur von 385°C in einem Tunnel- oder Haubenofen getempert.

### Beispiel 1a (Variation der Acidität des Bismutsalzes)

Die Vorgehensweise entspricht der in Beispiel 1, mit dem Unterschied, dass die Dosierung des Restüberschusses Bismut in Form einer stark essigsauren Bismutnitratlösung gemäß Anmeldung WO 2004/099078, Beispiel 1, jedoch mit einer 65%-igen Essigsäure, bei gleichen stöchiometrischen Verhältnissen bei auf 9m/s erhöhter Rührer- Umfangsgeschwindigkeit erfolgt. Das übrige Vorgehen entspricht dem in Beispiel 1. Die Ergebnisse sind koloristisch zunächst nicht unterscheidbar, obwohl die acetat-saure Bismutsalzlösung leicht opalesziert, doch lässt sich das Produkt nach Beispiel 1a auch nach dem Tempern leichter zusammen mit organischen Hilfsmitteln in organische polymere Bindemittel einarbeiten.

### Beispiel 2 (Farbmetrische Bewertung des nass gefällten Kompositpigmentes)

Nach der Mikronisierung des aus Beispiel 1 gewonnenen Kompositpigmentes erhält man ein brillantes, farbstarkes, hochdeckendes und feinteiliges Gelbpigment. Die Koloristik des Pigments wird im Purton und in der Aufhellung gegen den Standard über einem weißen Untergrund im CIELAB Farbraum (DIN 6174) gemessen. Dazu wird ein 2-Strahl-Spektralphotometer verwendet mit den folgenden Parametern: Messgeometrie d/10°, mit Glanz, Lichtart D 65. Die relative Farbstärke wird in der Aufhellung gegen den Standard über den gesamten sichtbaren Wellenlängenbereich in Anlehnung an DIN EN ISO 787-24 bestimmt. Im koloristischen Vergleich der Tabelle I stellt sich das Pigment gemäß Beispiel 1 in einem Alkyd- Einbrennlack wie folgt dar:

**Tabelle I**

| 60' bei 385°C Standard: handelsübliches Nickeltitan | | | | | | | |
|---|---|---|---|---|---|---|---|
| | DL* | Da* | Db* | DC* | DH* | DE | Farbstärke |
| Purton | 0,93 | -1,01 | 12,09 | 12,13 | 0,06 | 12,16 | - |
| 1:1 Aufhellung | -0,91 | -1,76 | 20,98 | 21,01 | -1,39 | 21,08 | 287% |

### Beispiel 3 (Bestimmung des Deckvermögens des nass gefällten Kompositpigmentes)

Die Bestimmung des Deckvermögens des aus Beispiel 1 gewonnenen Kompositpigmentes erfolgt gemäss DIN 55987 in einem oxidativ trocknenden Alkydlack. Dazu wurden 75 g Lack, 25 g Pigment und 120 g Glasperlen (2 mm) in einen Polypropylen - Becher eingewogen und 20 min auf einer Scandex-Schüttelmaschine geschüttelt. Der pigmentierte Lack wurde mit Hilfe eines Filmziehgerätes (Fa. Erichsen Modell 509 MCIII) mit einem Stufenrakel TYP 421/II der Fa. Erichsen mit Nassschichtdicken von 60 bis 400 µm auf schwarz-weiße Kontrastkarten aufgezogen. Nach dem Trocknen des Lackfilms wurde der Farbtonabstand DE über schwarzem und weißem Untergrund nach DIN 6174 ermittelt und gegen den Reziprokwert der Schichtstärke grafisch aufgetragen. Daraus wurde die Schichtstärke ermittelt, bei der der Farbtonabstand DE=1 ist. Dieses wurde sowohl für das gemäss Beispiel 1 erhaltene Kompositpigment als auch für ein Titandioxidpigment der Rutilmodifikation (= 100 %) bestimmt. Das Deckvermögen in der Tabelle II wird angegeben relativ zu Titandioxid. Die Konzentration der geprüften Pigmente lag unterhalb der kritischen Pigmentvolumenkonzentration (CPVK).

**Tabelle II**

| | Deckvermögen |
|---|---|
| Nickel-Antimon-Titan-Rutilgelb-Pigment | 84% |
| Nass gefälltes anorganisches Kompositpigment gem. Bsp. 1 | 120 % |
| Handelsübliches BiVO₄-Pigment | 86 % |

| | |
|---|---|
| (Deckvermögen relativ zu Titandioxid = 100 %) | |

### Beispiel 4 (Fällung von Bismutvanadat auf ein Rutilgelbpigment)

Die Durchführung entspricht dem Beispiel 1, wobei verschiedene Mengenverhältnisse zwischen Bismutvanadatgelb und Nickeltitan-Rutilgelb von 80 : 20 bis 15 : 85 eingestellt werden.

Man erzielt folgende Ergebnisse für die erhaltenen Kompositpigmente (Tabellen III und IV):

**Tabelle III**

| Zusammensetzung | | Standard 100% BiVO4 | | | | | |
|---|---|---|---|---|---|---|---|
| | | Purton | | | | | Aufhellung |
| BiVO₄ | NiTi | DL* | Da* | Db* | DC* | DE | Farbstärke |
| 75% | 25% | 0,05 | -1,57 | -3,17 | -3,07 | 3,53 | 88% |
| 55% | 45% | 0,15 | -1,07 | -5,25 | -5,08 | 5,36 | 78% |
| 25% | 75% | -0,25 | -2,96 | -13,93 | -13,68 | 14,24 | 48% |

**Tabelle IV**

| Zusammensetzung | | Standard 100% Nickeltitan | | | | | |
|---|---|---|---|---|---|---|---|
| | | Purton | | | | | Aufhellung |
| BiVO₄ | NiTi | DL* | Da* | Db* | DC* | DE | Farbstärke |
| 25% | 75% | 1,95 | -2,40 | 13,01 | 13,17 | 13,37 | 292% |
| 55% | 45% | 1,90 | -1,47 | 21,08 | 21,14 | 21,22 | 420% |
| 75% | 25% | 2,23 | -0,87 | 23,72 | 23,73 | 23,84 | 482% |

Während die Farbstärke der Kompositpigmente gegenüber Bismutvanadat unterproportional abnimmt (Tabelle III), wird eine drastische Zunahme der Sättigung DC sowie der Farbstärke, verglichen mit einem handelsüblichen Nickeltitan-Rutilgelb, erzielt (Tabelle IV). Sämtliche Beispiele bieten im Vergleich zu einem Standard-Nickeltitan deutliche Vorteile in Farbreinheit, Deckvermögen und Farbstärke.

Durch die Nutzung hochfein vermahlenen Nickeltitanrutilgelbes gemäss Anmeldung DE 102004040384.8 A1 erzielt man zudem in allen Bereichen der Zusammensetzung gegenüber Nickeltitan deutlich verbesserten Glanz in der Lackanwendung. Die Glanzmesswerte werden bestimmt nach DIN 67530. Als Prüfsystem wird ein Alkyd-Melamin-Einbrennlack (55%-Feststoffanteil) verwendet. Dazu werden 80 g Lack, 20 g Pigment und 120 g Glasperlen (2mm) in einen Polypropylen-Becher eingewogen und 20 min auf einer Scandex-Schüttelmaschine geschüttelt. Der pigmentierte Lack wird mit Hilfe eines Filmziehgerätes (Fa. Erichsen Modell 509 MCIII) mit einer Nassschichtdicke von 200 µm auf eine weiße Prüfkarte (Fa. Leneta Form WH) aufgezogen und 30 min bei 130°C eingebrannt. Anschließend erfolgt die Bestimmung der Reflektometerwerte.

**Tabelle V**

| GLANZ | | | |
|---|---|---|---|
| Zusammensetzung | | 20 ° | 60 ° |

| BiVO₄ | NiTi | | |
|---|---|---|---|
| - | 100% | 45,0 | 78,9 |
| 25% | 75% | 72,8 | 93,0 |
| 55% | 45% | 74,6 | 93,8 |
| 75% | 25% | 67,5 | 91,7 |
| 100% | - | 64,6 | 90,2 |

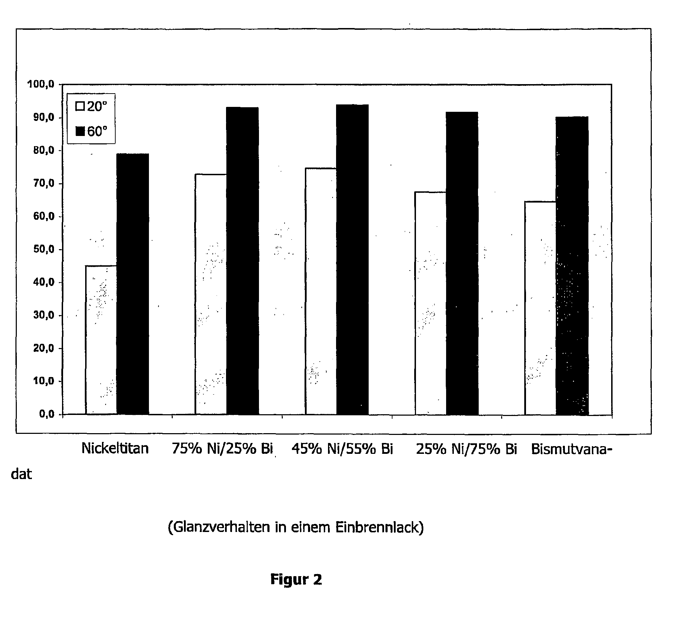

Der besseren Übersichtlichkeit wegen sind die Ergebnisse für verschiedene Mischungsverhältnisse im Vergleich in dem beiliegenden Diagramm in Form der Figur 2 (s. Anhang) graphisch dargestellt.

Die Vorteile eines erfindungsgemäßen Bismutvanadat-Kompositpigmentes werden auch in dieser Hinsicht offenbar.

### Beispiel 5 (Fällung einer amorphen Schicht auf die nach Beispielen 1 und 4 hergestellten Kompositpigmente)

Zu einer wässrigen Suspension von 1000 kg des jeweiligen Kompositpigmentes nach Beispielen 1 oder 4 in 1400 kg Wasser werden unter Rühren 200 kg Wasserglaslösung [c = 35 %] gegeben. Nach dem Homogenisieren im Homogenisator wird der Ansatz auf 90°C aufgeheizt und weitere 200 kg Wasserglas und 15 kg Phosphorsäure [c = 35 %] zugegeben. Nachdem 2 Stunden gerührt wurde, werden 750 kg Aluminiumsulfat-Lösung [c = 10 %] über einen Zeitraum von ca. einer Stunde zudosiert. Anschließend wird der pH-Wert mit geringen Mengen konzentrierter Natronlauge auf 6-7 eingestellt und die Heizung abgestellt. Das auf diese Weise eingekapselte Kompositpigment wird bis zu einer Leitfähigkeit von 450 µS gewaschen, dann getrocknet und zerkleinert.

Variationen gemäß der Patentschrift US-A-4375373 (Toro Ganryo) gelingen ausnahmslos auch zur Stabilisierung des erfindungsgemäßen Kompositpigmentes.

### Beispiel 6 (Anwendung der Kompositpigmente nach Beispiel 5 in PVC-Matrix)

Die gemäß Beispiel 5 erhaltenen Produkte werden in PVC-Walzfelle eingearbeitet und gegen reines Bismutvanadat bzw. Nickeltitan koloristisch geprüft. Die folgende Tabelle VI gibt beispielhaft einige Farbmesswerte der in PVC eingearbeiteten Kompositpigmente wieder.

**Tabelle VI**

| 15% Bismutvanadat + 85% Nickeltitan Standard: handelsübliches Nickeltitan | | | | | | | |
|---|---|---|---|---|---|---|---|
| | DL* | Da* | Db* | DC* | DH* | DE | Farbstärke |
| Purton | 11,62 | -22,75 | 21,30 | 18,76 | 24,88 | 33,26 | - |
| 1:1 Aufhellung | -0,24 | -1,52 | 6,18 | 6,36 | 0,15 | 6,37 | 145% |

| 55% Bismutvanadat + 45% Nickeltitan Standard: handelsübliches Nickeltitan | | | | | | | |
|---|---|---|---|---|---|---|---|
| | DL* | Da* | Db* | DC* | DH* | DE | Farbstärke |
| Purton | 10,14 | -22,80 | 33,97 | 31,35 | 26,28 | 42,15 | - |
| 1:1 Aufhellung | -0,59 | -2,98 | 14,98 | 15,28 | -0,21 | 15,29 | 224% |

| 55% Bismutvanadat + 45% Nickeltitan Standard: handelsübliches Bismutvanadat | | | | | | | |
|---|---|---|---|---|---|---|---|
| | DL* | Da* | Db* | DC* | DH* | DE | Farbstärke |
| Purton | 0,27 | 0,65 | -8,56 | -8,58 | 0,20 | 8,59 | - |
| 1:1 Aufhellung | 0,38 | 1,00 | -5,00 | -5,09 | 0,05 | 5,11 | 76% |

Die koloristische Prüfung des 55 : 45 - Kompositpigments in PVC gegen ein reines handelsübliches Bismutvanadat ergibt ein Defizit in der b-Achse und der Farbsättigung. Die Farbstärke erreicht einen Wert von 76%. Im Gegensatz dazu schneidet das Kompositpigment verglichen mit einem reinen Nickeltitan überproportional gut ab (145 - 224%) und kann insbesondere in den Punkten Farbreinheit, Sättigung und Farbstärke überzeugen.

### Beispiel 7 (Einarbeitung in HDPE-Matrix und Bewertung der Hitzebeständigkeit)

Die gemäß Beispiel 5 erhaltenen Produkte sowie reines Bismutvanadat werden bei unterschiedlichen Temperaturen in eine HDPE-Matrix eingearbeitet und anschließend koloristisch geprüft.

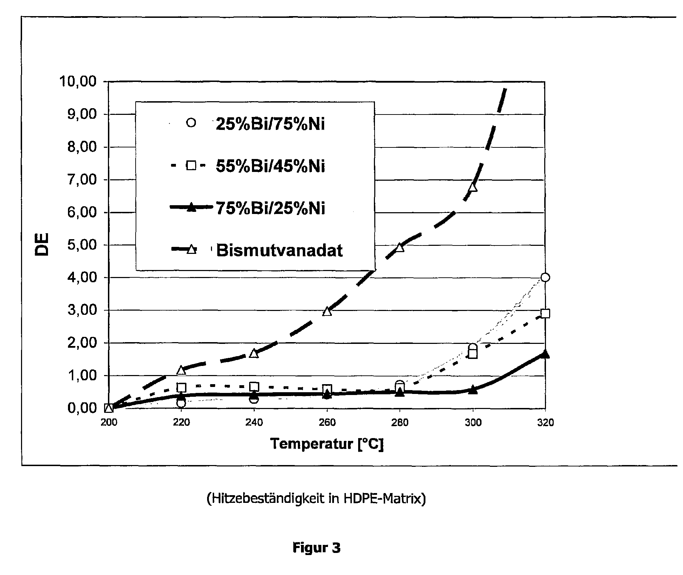

Das beiliegende Diagramm in Form der Figur 3 (s. Anhang) gibt die Hitzestabilitäten der Kompositpigmente für verschiedene Zusammensetzungen in HDPE wieder, bewertet anhand der Zunahme des Delta-E-Wertes als Leitparameter. Es ist deutlich zu erkennen, dass das reine Bismutvanadat die geringste Hitzestabilität aufweist. Die beste Hitzestabilität besitzt das Kompositpigment mit der Zusammensetzung 75% Bi / 25% Ni.

## Patentansprüche

1. Feinteiliges, brillantes, farbstarkes und hochdeckendes Kompositpigment mit einem Pigment auf Rutil-Basis sowie eines oder mehrerer Pigmente auf Basis von Bismutvanadat oder eines modifizierten Bismutvanadats, **dadurch gekennzeichnet, dass** das Kompositpigment eine Korngrößenverteilung mit Teilchendurchmessern zwischen 100 und 2600 nm und ein Hauptmaximum zwischen 200 und 700 nm, nach DIN 67530 einen 20°-Reflektometer-Glanzwert von mindestens 57 und einen 60°-Reflektometer-Glanzwert von mindestens 80 und ein Deckvermögen nach DIN 55978 von mehr als 90%, bezogen auf ein Titandioxid-Rutilpigment als Vergleichssubstanz, aufweist, es 10 bis 90 Gew.-% Pigment auf Rutil-Basis und 90 bis 10 Gew.-% Pigment auf Basis von Bismutvanadat bzw. des modifizierten Bismutvanadats, bezogen auf den Gesamtpigmentanteil, enthält, wobei das Pigment auf Rutil-Basis ein Nickel-Antimon-Rutilgelb oder ein Chrom-Antimon-Rutilgelb und von dem Bismutvanadat bzw. modifizierten Bismutvanadat umhüllt ist

2. Kompositpigment nach Anspruch 1, **dadurch gekennzeichnet, daß** das Maximum des Teilchendurchmessers zwischen 280 und 390 nm liegt.

3. Kompositpigment nach mindestens einem der Ansprüche 1 bis 2, **dadurch gekennzeichnet, dass** es eine nicht-kristalline Beschichtung aufweist.

4. Kompositpigment nach Anspruch 3, **dadurch gekennzeichnet, dass** die nicht-kristalline Beschichtung, bezogen auf den Gesamtpigmentanteil, 2 bis 30 Gew.-% ausmacht.

5. Kompositpigment nach Anspruch 4, **dadurch gekennzeichnet, dass** die nicht-kristalline Beschichtung 7 bis 20 Gew.-% ausmacht.

6. Kompositpigment nach einem der Ansprüche 3 bis 5, **dadurch gekennzeichnet, dass** die nicht-kristalline Beschichtung Oxide des Bors, Aluminiums, Siliziums und/oder Phosphors enthält.

7. Kompositpigment nach einem der Ansprüche 3 bis 6, **dadurch gekennzeichnet, dass** die nicht-kristalline Beschichtung mehrlagig ist und aus Salzen der Sauerstoffsäuren der Elemente der Gruppen 3 bis 5 des Periodensystems aufgebaut ist, wobei diese Salze in Form von Boraten, Silikaten, Phosphaten und/oder Aluminaten vorliegen.

8. Kompositpigment nach Anspruch 7, **dadurch gekennzeichnet, dass** die Borate, Silikate, Phosphate und/oder Aluminate in Form von Salzen des Bismuts, Calciums und/oder Aluminiums, vorliegen.

9. Kompositpigment nach mindestens einem der vorhergehenden Ansprüche, **dadurch gekennzeichnet dass** es zur koloristischen Feinabstimmung organische Buntpigmente enthält.

10. Kompositpigment nach Anspruch 9, **dadurch gekennzeichnet, dass** das Kompositpigment, bezogen auf die Gesamtmenge an Pigment, 0,1 bis 5 Gew.-% organische Buntpigmente enthält.

11. Kompositpigment nach Anspruch 9 oder 10, **dadurch gekennzeichnet, dass** die organischen Buntpigmente in Form von Chinophthalon-, Isoindolin-, Diketopyrrolopyrrol-, Phthalocyanin-, Indanthron-, Anthrachinon- und/oder Anthrapyrimidinpigmenten vorliegen.

12. Kompositpigment nach mindestens einem der vorhergehenden Ansprüche, **dadurch gekennzeichnet, dass** das modifizierte Bismutvanadat ein durch isomorphen Ersatz modifiziertes Bismutvanadat ist.

13. Kompositpigment nach Anspruch 12, **dadurch gekennzeichnet, dass** es sich bei dem isomorphen Ersatz um ein Nebengruppenelement aus den Gruppen 5 bis 7 in Form von Molybdän, Niob, Mangan und/oder Wolfram handelt.

14. Kompositpigment nach Anspruch 12, **dadurch gekennzeichnet, dass** es sich bei dem isomorphen Ersatz um ein Hauptgruppenelement der Gruppen 3 bis 5 in Form von Bor, Silizium und/oder Phosphor handelt.

15. Kompositpigment nach mindestens einem der vorhergehenden Ansprüche, **dadurch gekennzeichnet, dass** es nach DIN 67530 einen 20°-Reflektometer-Glanzwert von mindestens 60 und einen 60°-Reflektometer-Glanzwert von 85 bis 100 aufweist.

16. Kompositpigment nach Anspruch 15, **dadurch gekennzeichnet, dass** der 20°-Reflektometer-Glanzwert 65 bis 80 und der 60°-Reflektometer-Glanzwert 88 bis 95 beträgt

17. Kompositpigment nach mindestens einem der Ansprüche 1 bis 16, **dadurch gekennzeichnet, dass** das Deckvermögen nach DIN 55978 mehr als 110% beträgt.

18. Kompositpigment nach mindestens einem der vorhergehenden Ansprüche, **dadurch gekennzeichnet, dass** es eine Farbstärke nach DIN 55999 zwischen 110 und 500 %, bezogen auf ein Nickeltitan-Rutilpigment als Vergleichssubstanz, aufweist.

19. Kompositpigment nach Anspruch 18, **dadurch gekennzeichnet, dass** die Farbstärke zwischen 140 und 480 % liegt.

20. Kompositpigment nach mindestens einem der vorhergehenden Ansprüche, **dadurch gekennzeichnet, dass** es zur Staubminderung ein Wachs, insbesondere in Form von Calciumstearat, ein Polyethylenglykol und/oder Polysiloxan enthält.

21. Kompositpigment nach Anspruch 20, **dadurch gekennzeichnet, dass** der Anteil des Wachses bzw. Polyethylenglykols oder Polysiloxans, bezogen auf den Gesamtpigmentanteil, zwischen 0,2 und 12 Gew.-% liegt.

22. Verfahren zur Herstellung eines Kompositpigments nach mindestens einem der vorhergehenden Ansprüche, **dadurch gekennzeichnet, dass** eine wässrige Aufschlämmung des Pigmentes auf Rutil-Basis mit einem Feststoffgehaltes von 20 bis 50 Gew.-% und Teilchendurchmessern zwischen 50 und 1200 nm sowie einem Hauptmaximum der Korngrößenverteilung zwischen 200 und 400 nm in einem Mischbehälter vorgelegt wird, in diese wässrige Aufschlämmung zuerst die wässrige Lösung eines Vanadats und darauf die wässrige Lösung eines Bismutsalzes eingetragen werden, der saure pH-Wert der erhaltenen Reaktionsmischung unmittelbar darauf durch Zugabe von Lauge auf höher als 4 eingestellt wird, wodurch Bismutvanadat bei der sich zwischen 70 und 95°C einstellenden erhöhten Temperatur auf das Pigment auf Rutil-Basis aufgefällt und das anfallende Kompositpigment abgetrennt, getrocknet und calciniert wird.

23. Verfahren nach Anspruch 22, **dadurch gekennzeichnet, dass** der wässrigen Aufschlämmung des Pigments auf Rutil-Basis die wässrige Lösung eines BismutSalzes eines pH-Wertes von 0,1 bis 1,5 zugegeben wird.

24. Verfahren nach Anspruch 22 oder 23, **dadurch gekennzeichnet, dass** die Reaktion bei einer erhöhten Temperatur von mehr als 90°C durchgeführt wird.

25. Verfahren nach einem der Ansprüche 22 bis 24, **dadurch gekennzeichnet, dass** in der Aufschlämmung des Pigments auf Rutil-Basis ein Nickel-Antimon-Rutilgelb eingesetzt wird.

26. Verfahren nach einem der Ansprüche 22 bis 25, **dadurch gekennzeichnet, dass** der pH-Wert durch Zugabe von Natronlauge zwischen 8 und 11 eingestellt wird.

27. Verfahren nach einem der Ansprüche 22 bis 26, **dadurch gekennzeichnet, dass** auf dem erhaltenen calcinierten Kompositpigment eine nicht-kristalline Beschichtung ausgebildet wird.

28. Verfahren nach einem der Ansprüche 22 bis 27, **dadurch gekennzeichnet, dass** dem Kompositpigment zur Staubminderung ein Wachs, Polyethylenglykol und/oder Polysiloxan beigegeben wird.

29. Verwendung des Kompositpigmentes nach mindestens einem der Ansprüche 1 bis 21 zur Einarbeitung in polymere Materialien, Baustoffe, Lacke oder Farben.

## Claims

1. A finely-divided brilliant strongly colouring and highly opaque composite pigment containing a rutile-based pigment and one or more pigments based on bismuth vanadate or a modified bismuth vanadate, **characterised in that** the composite pigment has a particle size distribution with particle diameters between 100 and 2600 nm and a main maximum between 200 and 700 nm, a 20° reflectometer brightness of at least 57 and a 60° reflectometer brightness of at least 80 to DIN 67530 and a covering power to DIN 55978 of more than 90%, relative to a titanium dioxide rutile pigment substance used for comparison, and contains 10 to 90 wt.% rutile-based pigment and 90 to 10 wt.% pigment based on bismuth vanadate or on the modified bismuth vanadate relative to the total content of pigment, wherein the rutile-based pigment is a nickel-antimony rutile yellow or a chromium-antimony rutile yellow and is surrounded by the bismuth vanadate or modified bismuth vanadate.

2. A composite pigment according to claim 1, **characterised in that** the maximum particle diameter is between 280 and 390 nm.

3. A composite pigment according to at least one of claims 1 to 2, **characterised in that** it has a non-crystalline coating.

4. A composite pigment according to claim 3, **characterised in that** the non-crystalline coating makes up 2 to 30 wt.% of the total content of pigment.

5. A composite pigment according to claim 4, **characterised in that** the non-crystalline coating makes up 7 to 20 wt.%.

6. A composite pigment according to any of claims 3 to 5, **characterised in that** the non-crystalline coating contains oxides of boron, aluminium, silicon and/or phosphorus.

7. A composite pigment according to any of claims 3 to 6, **characterised in that** the non-crystalline component is multi-layered and is built up from salts of the oxyacids of the elements in groups 3 to 5 of the periodic system, wherein the said salts are in the form of borates, silicates, phosphates and/or aluminates.

8. A composite pigment according to claim 7, **characterised in that** the borates, silicates, phosphates and/or aluminates are in the form of salts of bismuth, calcium and/or aluminium.

9. A composite pigment according to at least one of the preceding claims, **characterised in that** it contains organic multi-coloured pigments for fine adjustment of the colour.

10. A composite pigment according to claim 9, **characterised in that** the composite pigment contains 0.1 to 5 wt.% of organic multi-coloured pigments relative to the total amount of pigment.

11. A composite pigment according to claim 9 or claim 10, **characterised in that** the organic multi-coloured pigments are quinophthalone, isoindoline, diketopyrrolopyrrole, phthalocyanine, indanthrone, anthraquinone and/or anthrapyrimidine pigments.

12. A composite pigment according to at least one of the preceding claims, **characterised in that** the modified bismuth vanadate is modified by isomorphic substitution.

13. A composite pigment according to claim 12, **characterised in that** the isomorphic substitution relates to a sub-group element from groups 5 to 7 and in the form of molybdenum, niobium, manganese and/or tungsten.

14. A composite pigment according to claim 12, **characterised in that** the isomorphic substitution relates to a main group element in groups 3 to 5 and in the form of boron, silicon and/or phosphorus.

15. A composite pigment according to at least one of the preceding claims, **characterised in that** it has a 20° reflectometer brightness of at least 60 and a 60° reflectometer brightness of 85 to 100 to DIN 67530.

16. A composite pigment according to claim 15, **characterised in that** the 20° reflectometer brightness is 65 to 80 and the 60° reflectometer brightness is 88 to 95.

17. A composite pigment according to at least one of claims 1 to 16, **characterised in that** the covering power to DIN 55978 is more than 110%.

18. A composite pigment according to at least one of the preceding claims, **characterised in that** it has a colouring power to DIN 55999 between 110 and 500%, relative to a nickel titanium rutile pigment used for comparison.

19. A composite pigment according to claim 18, **characterised in that** the colouring power is between 140 and 480%.

20. A composite pigment according to at least one of the preceding claims, **characterised in that** in order to reduce dust it contains a wax, especially in the form of calcium stearate, a polyethylene glycol and/or polysiloxane.

21. A composite pigment according to claim 20, **characterised in that** the proportion of the wax or polyethylene glycol or polysiloxane, relative to the total content of pigment, is between 0.2 and 12 wt.%.

22. A method of producing a composite pigment according to at least one of the preceding claims, **characterised in that** an aqueous suspension of the rutile-based pigment having a solids content of 20 to 50 wt.% and particle diameters between 50 and 1200 nm and a main particle-size distribution maximum between 200 and 400 nm is placed in a mixing container, the aqueous solution of a vanadate followed by the aqueous solution of a bismuth salt are introduced into the aqueous suspension, the acid pH of the resulting reaction mixture is immediately adjusted to above 4 by adding alkali, and at the resulting temperature, elevated to between 70 and 95°C, bismuth vanadate is precipitated on to the rutile-based pigment and the resulting composite pigment is separated, dried and calcined.

23. A method according to claim 22, **characterised in that** the aqueous solution of a bismuth salt, pH 0.1 to 0.5, is added to the aqueous suspension of the rutile-based pigment.

24. A method according to claim 22 or claim 23, **characterised in that** the reaction is carried out at an elevated temperature above 90°C.

25. A method according to any of claims 22 to 24, **characterised in that** a nickel-antimony rutile yellow is introduced into the suspension of the rutile-based pigment.

26. A method according to any of claims 22 to 25, **characterised in that** the pH is adjusted to between 8 and 11 by addition of caustic soda.

27. A method according to any of claims 22 to 26, **characterised in that** a non-crystalline coating is formed on the resulting calcined composite pigment.

28. A method according to any of claims 22 to 27, **characterised in that** in order to reduce dust, a wax or polyethylene glycol and/or polysiloxane is added to the composite pigment.

29. Use of the composite pigment according to at least one of claims 1 to 21 for incorporating in polymeric materials, building materials, lacquers or paints.

## Revendications

1. Pigment composite brillant, finement divisé, de haute intensité de couleur et de grand pouvoir couvrant, comprenant un pigment à base de rutile ainsi qu'un ou plusieurs pigments à base de vanadate de bismuth ou d'un vanadate de bismuth modifié, **caractérisé en ce que** le pigment composite présente une répartition granulométrique avec des diamètres de particules entre 100 et 2600 nm et un maximum principal entre 200 et 700 nm, une valeur de l'éclat au réflectomètre sous 20° au moins égale à 57 et une valeur de l'éclat au réflectomètre sous 60° au moins égale à 80 selon DIN 67530 et un pouvoir couvrant selon DIN 55978 de plus de 90 %, par rapport à un pigment de rutile au dioxyde de titane utilisé comme substance de comparaison, il contient 10 à 90 % en poids de pigment à base de rutile et 90 à 10 % en poids de pigment à base de vanadate de bismuth ou du vanadate de bismuth modifié, par rapport à la fraction totale de pigment, le pigment à base de rutile étant un jaune de nickel-antimoine-rutile ou un jaune de chrome-antimoine-rutile et étant enveloppé du vanadate de bismuth ou du vanadate de bismuth modifié.

2. Pigment composite suivant la revendication 1, **caractérisé en ce que** le maximum de diamètre des particules se situe entre 280 et 390 nm.

3. Pigment composite suivant l'une des revendications 1 et 2, **caractérisé en ce qu'**il présente un revêtement non cristallin.

4. Pigment composite suivant la revendication 3, **caractérisé en ce que** le revêtement non cristallin constitue 2 à 30 % en poids par rapport à la fraction totale de pigment.

5. Pigment composite suivant la revendication 4, **caractérisé en ce que** le revêtement non cristallin constitue 7 à 20 % en poids.

6. Pigment composite suivant l'une des revendications 3 à 5, **caractérisé en ce que** le revêtement non cristallin contient des oxydes de bore, d'aluminium, de silicium et/ou de phosphore.

7. Pigment composite suivant l'une des revendications 3 à 6, **caractérisé en ce que** le revêtement non cristallin est en plusieurs couches et est constitué de sels d'oxacides des éléments des Groupes 3 à 5 du Système Périodique, ces sels se présentant sous forme de borates, silicates, phosphates et/ou aluminates.

8. Pigment composite suivant la revendication 7, **caractérisé en ce que** les borates, silicates, phosphates et/ou aluminates se présentent sous forme de sels de bismuth, de calcium et/ou d'aluminium.

9. Pigment composite suivant au moins l'une des revendications précédentes, **caractérisé en ce qu'**il contient des pigments organiques de couleur destinés à l'harmonisation coloristique.

10. Pigment composite suivant la revendication 9, **caractérisé en ce qu'**il contient 0,1 à 5 % en poids de pigments organiques de couleur, par rapport à la quantité totale de pigment.

11. Pigment composite suivant la revendication 9 ou 10, **caractérisé en ce** les pigments organiques de couleur sont présents sous forme de pigments de quinophtalone, d'isoindoline, de dicétopyrrolopyrrole, de phtalocyanine, d'indanthrone, d'anthraquinone et/ou d'anthrapyrimidine.

12. Pigment composite suivant au moins l'une des revendications précédentes, **caractérisé en ce que** le vanadate de bismuth modifié est un vanadate de bismuth modifié par un élément de substitution isomorphe.

13. Pigment composite suivant la revendication 12, **caractérisé en ce que** l'élément de substitution isomorphe consiste en un élément de sous-groupe choisi dans les Groupes 5 à 7 sous forme de molybdène, niobium, manganèse et/ou tungstène.

14. Pigment composite suivant la revendication 12, **caractérisé en ce que** l'élément de substitution isomorphe est un élément de groupe principal des Groupes 3 à 5 sous forme de bore, de silicium et/ou de phosphore.

15. Pigment composite suivant au moins l'une des revendications précédentes, **caractérisé en ce qu'**il présente selon DIN 67530 un éclat au réfractomètre sous 20° d'au moins 60 et un éclat au réfractomètre sous 60° de 85 à 100.

16. Pigment composite suivant la revendication 15, **caractérisé en ce que** l'éclat au réfractomètre sous 20° a une valeur de 60 à 80 et l'éclat au réfractomètre sous 60° a une valeur de 88 à 95.

17. Pigment composite suivant au moins l'une des revendications 1 à 16, **caractérisé en ce que** le pouvoir couvrant selon DIN 55978 s'élève à plus de 110 %.

18. Pigment composite suivant au moins l'une des revendications précédentes, **caractérisé en ce qu'**il présente une intensité de couleur selon DIN 55999 entre 110 et 500 %, par rapport à un pigment de nickel-titane-rutile utilisé comme substance de référence.

19. Pigment composite suivant la revendication 18, **caractérisé en ce que** l'intensité de couleur se situe entre 140 et 480 %.

20. Pigment composite suivant au moins l'une des revendications précédentes, **caractérisé en ce qu'**il contient, en vue de réduire la formation de poussière, une cire en particulier sous forme de stéarate de calcium, un polyéthylèneglycol et/ou un polysiloxane.

21. Pigment composite suivant la revendication 20, **caractérisé en ce que** la proportion de cire ou bien de polyéthylèneglycol ou de polysiloxane, par rapport à la proportion totale de pigment, se situe entre 0,2 et 12 % en poids.

22. Procédé de production d'un pigment composite suivant au moins l'une des revendications précédentes, **caractérisé en ce qu'**une suspension aqueuse du pigment à base de rutile ayant une teneur en matière solide de 20 à 50 % en poids et des diamètres de particules entre 50 et 1200 nm ainsi qu'un maximum principal de répartition granulométrique entre 200 et 400 nm, est préalablement chargée dans un récipient mélangeur, tout d'abord la solution aqueuse d'un vanadate puis la solution aqueuse d'un sel de bismuth sont versées dans cette suspension aqueuse, le pH acide du mélange réactionnel obtenu est ajusté immédiatement après à une valeur supérieure à 4 par addition de lessive alcaline, ce qui fait précipiter du vanadate de bismuth sur le pigment à base de rutile à la température élevée qui s'établit entre 70 et 95°C, et le pigment composite obtenu est séparé, séché et calciné.

23. Procédé suivant la revendication 22, **caractérisé en ce que** la solution aqueuse d'un sel de bismuth ayant une valeur de pH de 0,1 à 1,5 est ajoutée à la suspension aqueuse de pigment à base de rutile.

24. Procédé suivant la revendication 22 ou 23, **caractérisé en ce que** la réaction est conduite à une température élevée supérieure à 90°C.

25. Procédé suivant l'une des revendications 22 à 24, **caractérisé en ce qu'**un jaune de nickel-antimoine-rutile est utilisé dans la suspension de pigment à base de rutile.

26. Procédé suivant l'une des revendications 22 à 25, **caractérisé en ce que** le pH est ajusté à une valeur comprise entre 8 et 11 par addition de soude caustique.

27. Procédé suivant l'une des revendications 22 à 26, **caractérisé en ce qu'**un revêtement non cristallin est formé sur le pigment composite calciné obtenu.

28. Procédé suivant l'une des revendications 22 à 27, **caractérisé en ce qu'**une cire, du polyéthylèneglycol et/ou un polysiloxane est ajouté au pigment composite pour réduire la formation de poussière.

29. Utilisation du pigment composite suivant au moins l'une des revendications 1 à 21 en vue de son incorporation dans des matières polymères, des matériaux de construction, des vernis ou des peintures.
